# EUROPEAN PATENT SPECIFICATION

(11) **EP 2 735 860 B1**
(45) Date of publication and mention of the grant of the patent: **30.09.2020**
(21) Application number: 13193828.4
(22) Date of filing: 21.11.2013
(51) Int. Cl.: G01N 21/05

(54) **Optofluidic device**
Optofluidische Vorrichtung
Dispositif optofluidique

(30) Priority: 21.11.2012 EP 12193614
(43) Date of publication of application: 28.05.2014
(73) Proprietor: RISE Research Institutes of Sweden AB, 501 15 Borås (SE)
(72) Inventor: Margulis, Walter, 141 60 HUDDINGE (SE); Sudirman, Azizahalhakim, 177 57 JÄRFÄLLA (SE)
(74) Representative: AWA Sweden AB

(56) References cited:
- WO-A1-2004/090510
- US-A- 5 493 629

## Description

### Field of the Invention

The present invention relates to an optofluidic device. More particularly, the present invention relates to an optofluidic device for coupling light into a fluid and to a method for manufacturing such an optofluidic device.

### Technical Background

In the last decade, with the development of genomics and electrophoresis, silica capillaries have been used in analyzing liquid substances such as organic material, for application in DNA sequencing and other areas. In a manner similar to optical analysis in lab-on-a-chip devices, optofluidics in capillaries and fibers is bound to grow and develop rapidly in the coming years. Optofluidics refers to the field of science where light and fluid interacts to allow for analysis, separation and for exploiting the optical properties of a medium. A typical device configuration in optofluidics involves optical waveguides and capillaries for fluid flow. The optical excitation of the fluid material by laser light is generally done transversally, i.e. with the light impinging upon the capillary from the side. In many cases, it would be desirable to excite an extended region of the fluid (for example up to 30 cm long region), but this is difficult in a configuration with transverse illumination.

One natural step would then be to attempt to illuminate the liquid under examination in a longitudinal configuration, i.e. where the illuminating light travels along the capillary. However, one serious limitation associated with longitudinal, or axial, illumination of a liquid is the interface of the liquid. At any open end in the capillary, the liquid forms a meniscus causing a lens effect. In addition, the exposure of the liquid under examination to ambient conditions such as air is often undesirable for stability reasons, and for chemical and/or biological reasons. Thus, it is typically desired to contain the liquid in a closed environment. For this reason, bulk cells or containers have been used at the entrance and at the exit of the capillary, wherein an optical window is provided to handle the optical coupling into the capillary.

EP1653216 addresses the abovementioned problem by disclosing a microfluidic device where light from an optical fiber is coupled longitudinally into a liquid in an all-spliced arrangement without meniscus formation, thereby containing the liquid in a protected environment. In the microfluidic device according to EP1653216, light propagating in the core of the fiber can be used for exciting and analyzing the substances in the solution. The liquid is inserted by polishing the side of the fiber to open holes therein, and by letting the liquid into longitudinal channels of the optical fiber through the opened holes without blocking the light flow.

However, if more than one fluid channel is to be used and several holes need to be opened, the fiber must to be rotated and polished anew, once for each hole. Every polishing renders the fiber more fragile. The polishing operation is time-consuming and the fiber may become brittle as a result. Other ways of opening the holes individually, by laser ablation, ion milling or high voltage perforation are also time consuming and make the fiber fragile.

WO2004/090510 discloses a device for evanescently coupling light into a liquid, wherein the light comprises an optical fiber having a light guiding core and a plurality of capillaries arranged in said fiber adjacent to and in parallel with said light guiding core of said optical fiber, wherein the capillaries can be filled by the liquid for spectroscopic analysis.

### Summary of the Invention

In view of the above-mentioned desired properties of an optofluidic device, it is an object of the present invention to provide an improved optofluidic device which provides efficient light coupling while being both more robust and easier to manufacture.

According to a first aspect of the present invention, there is provided an optofluidic device according to claim 1.

In the present context, optically coupled should be understood such that the two fibers are arranged so that light may propagate from the light guiding core of the first optical fiber to the light guiding core of the second optical fiber. The optical coupling may either be direct through a physical connection between the two fibers or indirect through an intermediate transparent material allowing propagation of light between the fibers. It should be understood that guidance in the reverse direction is also allowed, i.e., light may be collected by the second fiber through luminescence or scattering and delivered back to the first fiber, for example for analysis.

An optical fiber should in the present context be understood as similar to a conventional optical fiber, i.e. having a solid light guiding core and a protective cladding, unless explicitly stated otherwise. A conventional optical fiber can for example be found in high speed communication applications.

The external source from which light is provided can be any light source arranged external to the optofluidic device. The light source may for example be a laser, a light emitting diode, a supercontinuum light source or ambient light. Light from the light source is coupled into the light guiding core of the first optical fiber which in turn guides the light to the second optical fiber.

A capillary here refers to a tubular structure capable of guiding a fluid. A capillary may for example be an optical fiber having one or more longitudinal channels made within the fiber, or a capillary may be a tube made from a flexible material such as rubber or a flexible polymer. It should be noted that the physical phenomena of capillary action is not required for the optofluidic device to function and that capillary merely describes a tubular channel having a relatively small inner diameter.

Optical fiber refers to any type of optical fiber capable of guiding light known to the person skilled in the art. The optical fiber may for example be made from different types of glass or plastic materials. The fiber fluid channels refer to longitudinally extending fluid channels arranged essentially in parallel with the light guiding core.

In the present context, a fluid may refer to both a liquid and a gas, as the optofluidic device is equally well suited for analysis of both liquids and gases.

The present invention is based on the realization that an improved optofluidic device where light and fluid can propagate simultaneously, which is more robust and compact, may be achieved through an arrangement where fluid and light are separately provided to an end surface of an optical fiber comprising a solid light guiding core and a fiber fluid channel. Thereby, an efficient light coupling between the first optical fiber and the second optical fiber can be achieved while at the same time providing fluid to the second optical fiber without using openings in the sidewall of an optical fiber.

Commonly, the diameter of the optical fibers and capillaries ranges between approximately 100-1000 µm and the fiber fluid channels may have diameters from a few µm up to hundreds of µm. Such sizes are suitable for analysis of small volume samples using light, for instance, the identification of cells, bacteria and proteins. Another example application of optofluidics is where light is coupled into a hollow-core that allows for optical propagation, and there interacts with a gas contained in the hollow core over long distances for efficient wavelength conversion. Accordingly, the light guiding core may also be a hollow core. Another application example is where pump light of a shorter wavelength is coupled into a hollow core that allows for light propagation and interaction with a wavelength converting luminescent liquid, or with a polymerized material inserted as a liquid and subsequently cured, such as to provide a laser emitting light at a longer wavelength.

Additionally, in order to fully exploit the possibilities in optofluidics, it is necessary to be able to couple light and fluids into an optical fiber with a core for light guidance and fiber fluid channel for fluid delivery. Here, it is important that the optical loss is minimized and that fluid leakage is prevented. Besides, since the volumes involved are small, it is most advantageous to make use of small volume arrangements, where the dead volume is restricted. In this way, micro pumps can effectively start- and stop fluid flow with minimum delay and inertia, allowing for synchronizing fluid flow with the occurrence of an optical event or electrical trigger.

It should also be understood that the device described herein may advantageously be used in reverse order, where light and fluid are coupled from the second optical fiber and are separated into light guided in the first optical fiber and fluid in the capillary.

According to one embodiment of the invention, at least a portion of the second optical fiber may advantageously be arranged within the capillary. By arranging the second optical fiber at least partially within the capillary such that the end portion of the second optical fiber optically coupled to the first optical fiber extends a predetermined distance into the capillary, an overlap is provided between the second optical fiber and the capillary which may simplify manufacturing of the device and which also reduces the risk of fluid leakage at the interface between the second optical fiber and the capillary.

Furthermore, a second capillary of a smaller diameter than the first capillary may be inserted into the capillary fluid channel, and the outer capillary may be collapsed around the inner smaller diameter capillary to facilitate an external fluidic connection to the capillary fluid channel, and subsequently to the fiber fluid channel.

In one embodiment of the invention, at least one of the first optical fiber and the second optical fiber may comprise a plurality of light guiding cores. An optical fiber comprising a plurality of cores may for example be used if it is desirable to provide light of different wavelengths by optically coupling separate cores of the first optical fibers to corresponding cores of the second optical fiber. Light of different wavelengths may then be provided to each of the cores of the first optical fiber. Thereby, a fluid may be made to interact with light of different wavelengths without the use of different optofluidic devices or without needing to switch the input device. Furthermore, the plurality of cores can be arranged in various ways known by the person skilled in the art. For example, two cores in the second optical fiber could be arranged coaxially, one for the delivery of light to the fluid and the other one for the collection of light back to the detector. By separating the two optical paths, it becomes easier to prevent cross-talk between the delivered light to the sample and retrieved light from the sample.

According to one embodiment of the invention at least one of the core of the first optical fiber and the core of the second optical fiber may advantageously be an imaging core. In the present context, an imaging core of a fiber can be used to provide an image of an object while simultaneously providing a fluid to the location which is observed through the fiber fluid channel. A fiber having an imaging core can for example be used in an endoscope for medical imaging. An optical fiber having an imaging core may also be referred to as an imaging fiber.

The first optical fiber is be spliced to said second optical fiber, thereby forming a physical connection between the two fibers. The two fibers may be mechanically spliced together or heated so that the fibers are fused. Accordingly, the arrangement allows for coupling of the optical fibers through splicing, which can be made with low loss and at low cost.

In one embodiment of the invention the optofluidic device may further comprise a seal arranged between the first optical fiber and a sidewall of the capillary to prevent leakage of fluid from the capillary. The seal may for example comprise a ceramic, a glass-based material, a resin, a glue or the like providing a seal between the sidewall of the capillary and the first optical fiber. Sealing may for example be achieved by providing a material which is cured to form a ceramic or glass seal. Preferably, the sealing material may be bio-compatible.

According to various embodiments of the invention, the optical fibers may be either single-mode fibers or multi-mode fibers. A multimode optical fiber may be used to reduce coherence effects (speckle) and to allow for a larger light collection cross-section compared with a single mode fiber.

According to one embodiment of the invention, the diameter of the first optical fiber may advantageously be smaller than the diameter of the second optical fiber. By forming an optical connection between a first optical fiber having a smaller outer diameter than the second optical fiber, light may be coupled from the light guiding core of the first optical fiber to the light guiding core of the second optical fiber while fluid can flow from the capillary into longitudinal fluid channels in the second optical fibers having openings at the end surface of the second optical fiber. Furthermore, in this arrangement, the dead volume is small, allowing for efficient fluid pumping through and from the fiber fluid channel.

In one embodiment of the invention, the optofluidic device may preferably comprise a protective housing enclosing a portion of said optofluidic device comprising said opening. A housing is advantageously arranged surrounding the opening to provide mechanical protection to avoid that the first optical fiber breaks at the opening of the capillary. Such mechanical protection may be particularly important when the first optical fiber is thinner than a conventional fiber thereby making it more fragile. The housing may be embodied as a conventional splice protector sleeve, or as a similar tubular structure providing sufficient mechanical protection.

Furthermore, the protective housing may advantageously comprise a heat-shrink material. Thereby, after arranging the end portion of the second optical fiber within the capillary, the capillary can be made to shrink through heating, thereby sealing the junction between the fiber and the capillary. A heat shrink material may for example comprise a thermoplastic material such as a polymer which is configured to shrink when exposed to heat.

According to a second aspect of the present invention, there is provided a method according to claim 12 for manufacturing an optofluidic device.

Furthermore, the interface between the first optical fiber and the second optical fiber may be arranged adjacent to the opening where the first optical fiber passes through the capillary wall.

By using the above described method, the forming of the optical connection can be performed outside of the capillary, thereby making it possible to use conventional methods for connecting optical fibers such as splicing.

In one embodiment of the invention, the step of forming an opening in a sidewall of said tubular capillary may advantageously comprise laser ablation polishing, etching or ion milling of said fiber.

According to one embodiment, the method may further comprise the step of providing a protective housing enclosing the optofluidic device in a region surrounding said opening.

Additionally, a capillary of a smaller diameter than the inner diameter of the capillary fluid channel may be inserted into the capillary fluid channel and the outer capillary may be collapsed around the inner smaller diameter capillary.

Further effects and features of this second aspect of the present invention are largely analogous to those described above in connection with the first aspect of the invention.

Moreover, additional features of, and advantages with, the present invention will become apparent when studying the appended claims and the following description. The skilled person will readily realize that different features of the present invention may be combined to create embodiments other than those described in the following, without departing from the scope of the present invention.

### Brief Description of the Drawings

These and other aspects of the present invention will now be described in more detail with reference to the appended drawings showing an example embodiment of the invention, wherein:
Fig. 1 schematically illustrates an optofluidic device according to an embodiment of the invention;
Figs. 2a and 2b schematically illustrate details of the optofluidic device of Fig. 1;
Fig. 3 schematically illustrates optofluidic device enclosed in a housing according to an embodiment of the invention; and
Fig. 4 is a flowchart outlining the method for manufacturing an optofluidic device according to an embodiment of the invention.

### Detailed Description of Preferred Embodiments of the Invention

In the present detailed description, various embodiments of an optofluidic device according to the present invention are mainly discussed with reference to an optofluidic device comprising optical fibers.

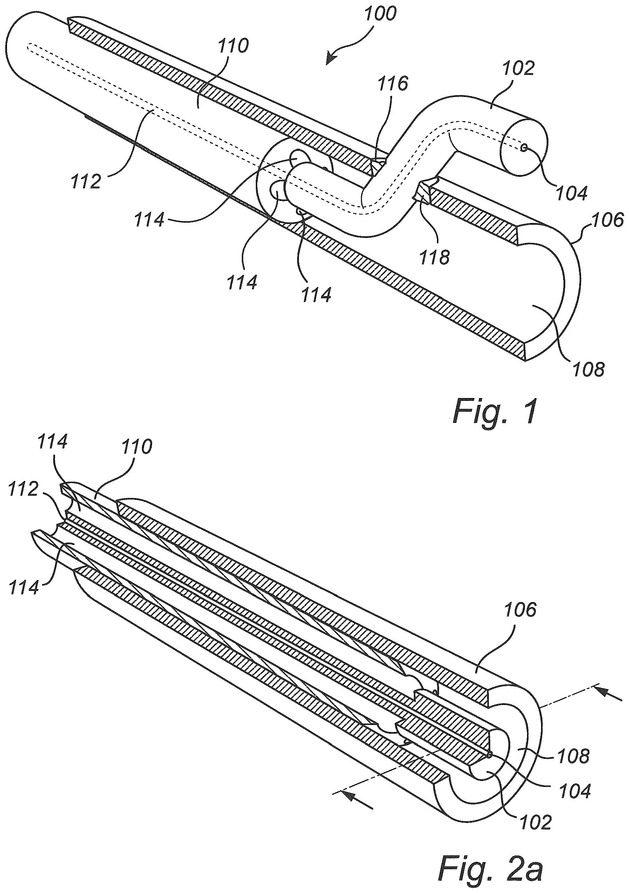

Fig. 1 illustrates an optofluidic device 100 comprising a first optical fiber 102 having a light guiding core 104, a capillary 106 having a capillary fluid channel 108, a second optical fiber 110 having a light guiding core 112 and four fiber fluid channels 114 in parallel with the light guiding core 112. The second optical fiber 110 is arranged within the capillary fluid channel 108 to allow direct fluid communication between the capillary fluid channel 108 and each of the fiber fluid channels 114. The first optical fiber 102 extends through an opening 116 in a sidewall of the capillary 106 and is further optically coupled to the second optical fiber 110 so that light may be guided from an external source into the light guiding core 112 of the second optical fiber 110. The opening 116 where the first optical fiber 102 enters into the capillary 106 is sealed 118 with a resin or a similar material to ensure that fluid does not leak from the capillary fluid channel 108 through the opening 116.

In the present embodiment, the first optical fiber 102 is a standard silica telecom fiber, with an original diameter of 125 µm, having been etched down to a diameter of 50 µm and with an 8 µm germanium doped core. The second optical fiber 110 is equal to the first optical fiber 102 except that it has a diameter of 125 µm, and with four longitudinal tubular fluid channels 114 formed within. As a skilled person readily realizes, in principle any optical fiber having a solid core for enabling propagation of light may be used. The tubular fluid channels 114 extend longitudinally in the fiber adjacent to (i.e. not coinciding) and in parallel with the light guiding core 112. The tubular fluid channels 114 are thus arranged at a distance from the light guiding core 112. The capillary 106 is a silica fiber capillary with an inner diameter of 127 µm and outer diameter of 250 µm.

Fig. 2a illustrates a portion of the optofluidic device where it can be seen that the first optical fiber 102 is spliced to the second optical fiber 110 so that the light guiding cores 104, 112 are in contact and aligned in order to allow light being guided from an external source into the core 104 of the first optical fiber 102 and further into the core 112 of the second optical fiber 110 such that optical losses are kept at a minimum.

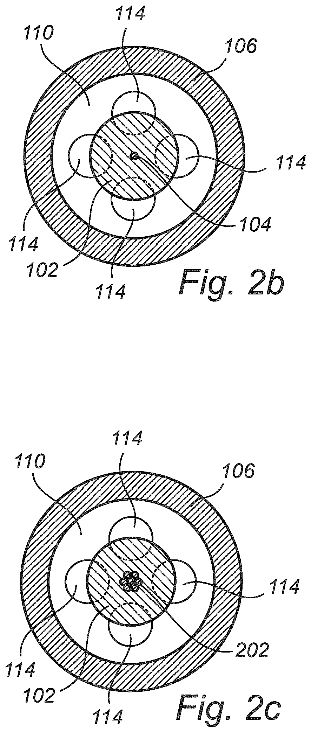

In Fig. 2b it is illustrated how the difference in diameter of the first optical fiber 102 and the second optical fiber 110 along with the arrangement of the fiber fluid channels 114 allows for a fluid to flow from the capillary fluid channel 108 into the fiber fluid channels 114 when the first optical fiber 102 is coupled to the second optical fiber 110.

Fig. 2c schematically illustrates an optofluidic device where optical fibers comprise multiple light guiding cores 202.

It should be noted that the dimensions given above merely represent an example embodiment, possible variations will be apparent to the person skilled in the art. The diameter of the optical fiber may for example vary between 50 µm and 3 mm and the diameter of the light guiding core may be between 5 and 50 µm for a single mode core and between 50 and 500 µm for a multimode core.

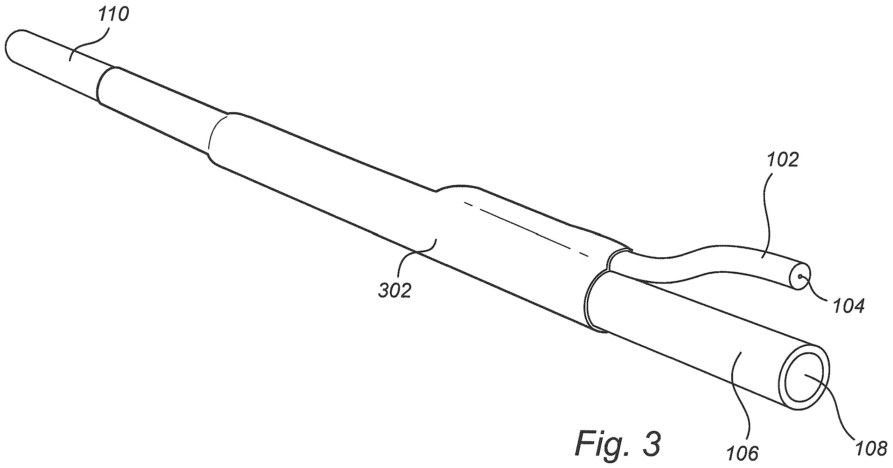

Fig. 3 illustrates the optofluidic device 100 enclosed in a protective housing 302, i.e. a protective sleeve, in the form of a standard splice protector. The protective sleeve 302 comprises a heat shrinking plastic material so that the optofluidic device 100 is securely enclosed after heat treatment of the sleeve 302. The protective sleeve may further comprise a straight rigid rod (not shown), such as a steel rod, for mechanical support to ensure that the optofluidic device is not damaged from bending of the protective sleeve.

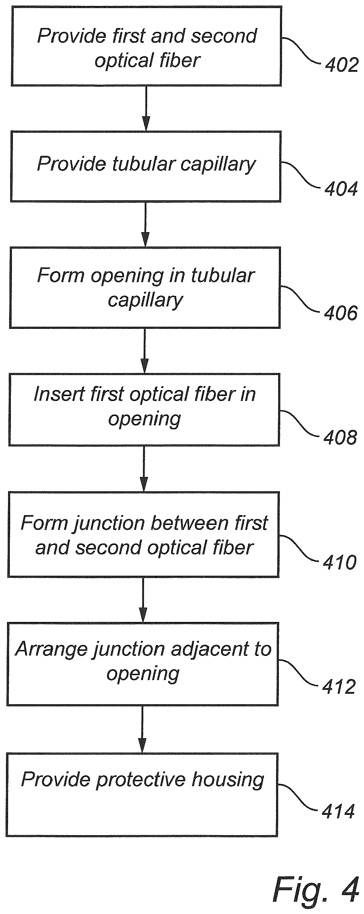

Fig. 4 is a flow-chart outlining the general manufacturing steps of the method for manufacturing the optofluidic device 100 described above.

In a first step 402, a first and a second optical fiber 102, 110 is provided. At least a portion of the first optical fiber 102 has been thinned down from the standard diameter of 125 µm to 50 µm by etching in hydrofluoric acid (HF) and the second optical fiber 110 comprises four tubular fiber fluid channels 114. The etched first optical fiber 102 is cleaved with a standard fiber cleaver to provide a smooth end surface of the fiber.

Next, a tubular capillary 106 is provided 404 and a an opening 116 in the sidewall of the capillary 106 is formed 406 by polishing from the side of the capillary 106 using a rotating drum with an attached sandpaper to create an opening 116 having a length of approximately 1 mm and a width of approximately 60 µm.

The first optical fiber 102 is then inserted 408 through the polished opening 116 into the capillary 106. The first optical fiber is pulled through the opening so that its end extend out of the capillary in order to facilitate fusion splicing 410 of the first optical fiber 102 to the second optical fiber 110.

In the next step 412, the joined first and second fibers 102, 110 are pulled back inside the capillary 106 so that the junction between the fibers is located close to the opening 116 of the capillary 106 as illustrated in Fig. 1, or at least within the capillary. The opening 116 in the capillary 106 and the opening at the end of the capillary where the second optical fiber 110 exits the capillary fluid channel 108 are sealed with an adhesive or a resin so that fluid cannot leak from the capillary 106. For some applications, the sealing material may preferably be biocompatible. Furthermore, a smaller diameter capillary (not shown) may be arranged within the capillary fluid channel 108 to facilitate external coupling of a fluid into the optofluidic device 100.

Finally, in step 414, the fiber arrangement is placed inside a standard splice protector 302 comprising a heat-shrink material, and the splice protector is heat treated to shrink around the optofluidic device 100.

Even though the invention has been described with reference to specific exemplifying embodiments thereof, many different alterations, modifications and the like will become apparent for those skilled in the art. For example, various different types of fibers and capillaries may be used. Also, it should be noted that parts of the system may be omitted, interchanged or arranged in various ways, the optofluidic device yet being able to perform the functionality of the present invention.

Additionally, variations to the disclosed embodiments can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

## Claims

1. An optofluidic device (100) for coupling light into a fluid, comprising:
a first optical fiber (102) having a solid light guiding core (104);
a capillary (106) having a capillary fluid channel (108);
a second optical fiber (110) having a solid light guiding core (112) and at least one fiber fluid channel (114) arranged adjacent to and in parallel with said solid light guiding core of said second optical fiber;
wherein said capillary fluid channel (108) is arranged in direct fluid communication with said at least one fiber fluid channel (114); and
wherein said first optical fiber (102) extends through an opening (116) in a sidewall of said capillary (106) and is optically coupled to said second optical fiber (110) to guide light from an external light source into said solid light guiding core (112) of said second optical fiber (110),
wherein said first optical fiber (102) is spliced to said second optical fiber (110).

2. The optofluidic device (100) according to claim 1, wherein at least a portion of said second optical fiber (112) is arranged within said capillary (106).

3. The optofluidic device (100) according to claim 1 or 2, wherein at least one of said first optical fiber (102) and said second optical fiber (110) comprises a plurality of light guiding cores (202).

4. The optofluidic device (100) according to any one of the preceding claims, wherein at least one of said light guiding core (104) of said first optical fiber (102) and said light guiding core (112) of said second optical fiber (110) is an imaging core.

5. The optofluidic device (100) according to any one of the preceding claims, further comprising a seal (118) arranged between said first optical fiber (102) and a sidewall of said capillary (106) to prevent leakage of fluid from said capillary.

6. The optofluidic device (100) according to claim 5, wherein said seal (118) comprises a resin or glue.

7. The optofluidic device (100) according to any one of the preceding claims, wherein at least one of said first optical fiber (102) and said second optical fiber (110) is a single mode optical fiber.

8. The optofluidic device (100) according to any one of the preceding claims, wherein at least one of said first optical fiber (102) and said second optical fiber (110) is a multimode optical fiber.

9. The optofluidic device (100) according to any one of the preceding claims, wherein the diameter of said first optical fiber (102) is smaller than the diameter of said second optical fiber (110).

10. The optofluidic device (100) according to any one of the preceding claims, further comprising a protective housing (302) enclosing a portion of said optofluidic device (100) comprising said opening (116).

11. The optofluidic device (100) according to claim 10, wherein said protective housing (302) comprises a heat-shrink material.

12. Method for manufacturing an optofluidic device (100) for coupling light into a fluid, comprising the steps of:
providing (402) a first optical fiber (102) comprising a first solid light guiding core (104) and a second optical fiber (110) comprising a second solid light guiding core (112) and at least one longitudinal fiber fluid channel (114) arranged adjacent to and in parallel with said solid light guiding core (112) of said second optical fiber;
providing (404) a tubular capillary (106) having a capillary fluid channel (108);
forming (406) an opening (116) in a sidewall of said tubular capillary (106);
inserting (408) said first optical fiber (102) into said tubular capillary (106) through said opening (116);
forming (410) an interface between said first optical fiber (102) and said second optical fiber (110) such that an optical connection between said first light guiding core (104) and said second light guiding core (112) is formed, said interface being formed by splicing of the first optical fiber (102) to the second optical fiber (110); and
arranging (412) said first optical fiber (102) and said second optical fiber (110) within said capillary (106) such that said interface is located within said capillary (106).

13. Method according to claim 12, wherein the step of forming an opening in a sidewall of said tubular capillary (106) comprises laser ablation polishing, etching or ion milling of said tubular capillary.

14. Method according to claim 12 or 13, further comprising the step of providing (414) a protective housing (302) enclosing said optofluidic device (100) in a region surrounding said opening (116).

## Patentansprüche

1. Optofluidische Vorrichtung (100), zum Einkoppeln von Licht in eine Flüssigkeit, umfassend:
einen ersten Lichtwellenleiter (102), wobei der erste Lichtwellenleiter einen festen Lichtleitkern (104) hat;
eine Kapillare (106), wobei die Kapillare einen Kapillarfluidkanal (108) hat;
einen zweiten Lichtwellenleiter (110), wobei der zweite Lichtwellenleiter einen festen Lichtleitkern (112) und mindestens einen Faserfluidkanal (114) hat, der neben und parallel zu dem Lichtleitkern des zweiten Lichtwellenleiters angeordnet ist;
wobei der Kapillarfluidkanal (108) in direkter Fluidverbindung mit dem mindestens einen Faserfluidkanal (114) angeordnet ist; und
wobei sich der erste Lichtwellenleiter (102) durch eine Öffnung (116) in einer Seitenwand der Kapillare (106) erstreckt und optisch mit dem zweiten Lichtwellenleiter(110) gekoppelt ist, um Licht von einer externen Lichtquelle in den Lichtleitkern (112) des zweiten Lichtwellenleiters (110) zu leiten,
wobei der erste Lichtwellenleiter (102) mit dem zweiten Lichtwellenleiter (110) gespleißt ist.

2. Optofluidische Vorrichtung (100) nach Anspruch 1, wobei mindestens ein Teil des zweiten Lichtwellenleiters (112) innerhalb der Kapillare (106) angeordnet ist.

3. Optofluidische Vorrichtung (100) nach Anspruch 1 oder 2, wobei mindestens einer des ersten Lichtwellenleiters (102) und des zweiten Lichtwellenleiters (110) mehrere Lichtleitkerne (202) umfasst.

4. Optofluidische Vorrichtung (100) nach einem der vorhergehenden Ansprüche, wobei mindestens einer des Lichtleitkerns (104) des ersten Lichtwellenleiters (102) und des Lichtleitkerns (112) des zweiten Lichtwellenleiters (110) ein Bildgebungskern ist.

5. Optofluidische Vorrichtung (100) nach einem der vorhergehenden Ansprüche, ferner umfassend eine Dichtung (118), die zwischen dem ersten Lichtwellenleiter (102) und einer Seitenwand der Kapillare (106) angeordnet ist, um ein Austreten von Flüssigkeit aus der Kapillare zu verhindern.

6. Optofluidische Vorrichtung (100) nach Anspruch 6, wobei die Dichtung (118) ein Harz oder einen Klebstoff umfasst.

7. Optofluidische Vorrichtung (100) nach einem der vorhergehenden Ansprüche, wobei mindestens einer des ersten Lichtwellenleiters (102) und des zweiten Lichtwellenleiters (110) ein Singlemode- Lichtwellenleiter ist.

8. Optofluidische Vorrichtung (100) nach einem der vorhergehenden Ansprüche, wobei mindestens einer des ersten Lichtwellenleiters (102) und des zweiten Lichtwellenleiters (110) ein Multimode- Lichtwellenleiters ist.

9. Optofluidische Vorrichtung (100) nach einem der vorhergehenden Ansprüche, wobei der Durchmesser des ersten Lichtwellenleiters (102) kleiner ist als der Durchmesser des zweiten Lichtwellenleiters (110).

10. Optofluidische Vorrichtung (100) nach einem der vorhergehenden Ansprüche, ferner umfassend ein Schutzgehäuse (302), das einen Teil der optofluidische Vorrichtung (100) das die Öffnung (116) umschließt, umfasst.

11. Optofluidische Vorrichtung (100) nach Anspruch 10, wobei das Schutzgehäuse (302) ein Wärmeschrumpfmaterial umfasst.

12. Verfahren zur Herstellung einer optofluidischen Vorrichtung (100) zum Einkoppeln von Licht in eine Flüssigkeit, umfassend die Schritte:
Bereitstellen (402) eines ersten Lichtwellenleiters (102), wobei der Lichtwellenleiter einen ersten festen Lichtleitkern (104) umfasst, und einen zweiten Lichtwellenleiter (110), der einen zweiten festen Lichtleitkern umfasst (112) und mindestens einen Längsfaserfluidkanal (114), der neben und parallel zu dem festen Lichtleitkern (112) angeordnet ist;
Bereitstellen (404) einer röhrenförmigen Kapillare (106), wobei die Kapillare einem Kapillarfluidkanal (108) hat;
Bilden (406) einer Öffnung (116) in einer Seitenwand der röhrenförmigen Kapillare (106);
Einführen (408) des ersten Lichtwellenleiters (102) in die röhrenförmige Kapillare (106) durch die Öffnung (116);
Bilden (410) einer Grenzfläche zwischen dem ersten Lichtwellenleiter (102) und dem zweiten Lichtwellenleiter (110), so dass eine optische Verbindung zwischen dem ersten Lichtleitkern (104) und dem zweiten Lichtleitkern (112) gebildet wird, wobei die Grenzfläche durch Spleißen des ersten Lichtwellenleiters (102) mit dem zweiten Lichtwellenleiter (110) gebildet wird; und
Anordnen (412) des ersten Lichtwellenleiters (102) und des zweiten Lichtwellenleiters (110) innerhalb der Kapillare (106), so dass sich die Grenzfläche innerhalb der Kapillare (106) befindet.

13. Verfahren nach Anspruch 12, wobei der Schritt des Bildens einer Öffnung in einer Seitenwand der röhrenförmigen Kapillare (106) das Polieren durch Laserablation, Ätzen oder lonenfräsen der röhrenförmigen Kapillare umfasst.

14. Verfahren nach Anspruch 12 oder 13, ferner umfassend den Schritt des Bereitstellens (414) eines Schutzgehäuses (302),wobei das Schutzgehäuse die optofluidische Vorrichtung (100) in einem Bereich, der die Öffnung (116) umgibt, umschließt.

## Revendications

1. Dispositif optofluidique (100) pour coupler la lumière dans un fluide, comprenant :
une première fibre optique (102) ayant un cœur solide de guidage de lumière (104) ;
un capillaire (106) ayant un canal de fluide capillaire (108) ;
une seconde fibre optique (110) ayant un cœur solide de guidage de lumière (112) et au moins un canal de fluide de fibre (114) disposé adjacent à et en parallèle avec ledit cœur solide de guidage de lumière de ladite seconde fibre optique ;
dans lequel ledit canal de fluide capillaire (108) est agencé en communication fluidique directe avec ledit au moins un canal de fluide de fibre (114) ; et
dans lequel ladite première fibre optique (102) s'étend à travers une ouverture (116) dans une paroi latérale dudit capillaire (106) et est couplée optiquement à ladite seconde fibre optique (110) pour guider la lumière provenant d'une source de lumière externe dans ledit cœur solide de guidage de lumière (112) de ladite seconde fibre optique (110),
dans lequel ladite première fibre optique (102) est épissée à ladite seconde fibre optique (110).

2. Dispositif optofluidique (100) selon la revendication 1, dans lequel au moins une partie de ladite seconde fibre optique (112) est disposée à l'intérieur dudit capillaire (106).

3. Dispositif optofluidique (100) selon la revendication 1 ou 2, dans lequel au moins l'une de ladite première fibre optique (102) et de ladite seconde fibre optique (110) comprend une pluralité de cœurs de guidage de lumière (202).

4. Dispositif optofluidique (100) selon l'une quelconque des revendications précédentes, dans lequel au moins l'un dudit cœur de guidage de lumière (104) de ladite première fibre optique (102) et dudit cœur de guidage de lumière (112) de ladite seconde fibre optique (110) est un cœur d'imagerie.

5. Dispositif optofluidique (100) selon l'une quelconque des revendications précédentes, comprenant en outre un joint (118) disposé entre ladite première fibre optique (102) et une paroi latérale dudit capillaire (106) pour empêcher une fuite de fluide dudit capillaire.

6. Dispositif optofluidique (100) selon la revendication 5, dans lequel ledit joint (118) comprend une résine ou une colle.

7. Dispositif optofluidique (100) selon l'une quelconque des revendications précédentes, dans lequel au moins l'une de ladite première fibre optique (102) et de ladite seconde fibre optique (110) est une fibre optique monomode.

8. Dispositif optofluidique (100) selon l'une quelconque des revendications précédentes, dans lequel au moins l'une de ladite première fibre optique (102) et de ladite seconde fibre optique (110) est une fibre optique multimode.

9. Dispositif optofluidique (100) selon l'une quelconque des revendications précédentes, dans lequel le diamètre de ladite première fibre optique (102) est inférieur au diamètre de ladite seconde fibre optique (110).

10. Dispositif optofluidique (100) selon l'une quelconque des revendications précédentes, comprenant en outre une housse de protection (302) renfermant une partie dudit dispositif optofluidique (100) comprenant ladite ouverture (116).

11. Dispositif optofluidique (100) selon la revendication 10, dans lequel ladite housse de protection (302) comprend un matériau thermorétractable.

12. Procédé de fabrication d'un dispositif optofluidique (100) pour coupler la lumière dans un fluide, comprenant les étapes consistant à :
fournir (402) une première fibre optique (102) comprenant un premier cœur solide de guidage de lumière (104) et une seconde fibre optique (110) comprenant un second cœur solide de guidage de lumière (112) et au moins un canal de fluide de fibre longitudinal (114) disposé adjacent à et en parallèle avec ledit cœur solide de guidage de lumière (112) de ladite seconde fibre optique ;
fournir (404) un capillaire tubulaire (106) ayant un canal de fluide capillaire (108) ;
former (406) une ouverture (116) dans une paroi latérale dudit capillaire tubulaire (106) ;
insérer (408) ladite première fibre optique (102) dans ledit capillaire tubulaire (106) à travers ladite ouverture (116) ;
former (410) une interface entre ladite première fibre optique (102) et ladite seconde fibre optique (110) de telle sorte qu'une connexion optique entre ledit premier cœur de guidage de lumière (104) et ledit second cœur de guidage de lumière (112) est formée, ladite interface étant formée par épissage de la première fibre optique (102) à la seconde fibre optique (110) ; et
disposer (412) ladite première fibre optique (102) et ladite seconde fibre optique (110) à l'intérieur dudit capillaire (106) de telle sorte que ladite interface est située à l'intérieur dudit capillaire (106).

13. Procédé selon la revendication 12, dans lequel l'étape consistant à former une ouverture dans une paroi latérale dudit capillaire tubulaire (106) comprend le polissage par ablation au laser, la gravure ou le fraisage ionique dudit capillaire tubulaire.

14. Procédé selon la revendication 12 ou 13, comprenant en outre l'étape consistant à fournir (414) une housse de protection (302) renfermant ledit dispositif optofluidique (100) dans une région entourant ladite ouverture (116).
